# EUROPEAN PATENT APPLICATION

(11) **EP 1 048 689 A1**
(43) Date of publication of application: **02.11.2000**
(21) Application number: 00109031.5
(22) Date of filing: 27.04.2000
(51) Int. Cl.: C08K 13/02, C08L 57/08

(54) **Chlorine-Containing resin composition**

(30) Priority: 28.04.1999 JP 12100599
(71) Applicant: Kyowa Chemical Industry Co., Ltd., Takamatsu-shi, Kagawa 761-0113 (JP)
(72) Inventor: Nosu, Tsutomu, Research and Development Department, Sakaide-shi, Kagawa 762-0012 (JP); Matsushima,Hayao, Research and Development Dep., Sakaide-shi, Kagawa 762-0012 (JP)
(74) Representative: Albrecht, Thomas, Dr.

(57) **Abstract**

A chlorine-containing resin composition comprising
(a) a chlorine-containing resin,
(b) a calcium-containing hydroxide,
(c) a hydrotalcite compound,
(d) a β-diketone compound or dihydropyridine (or oligomer thereof), and
(e) a carboxylate or organic phosphate of an alkali earth metal or zinc.

This resin composition is not foamed by molding and a molded product having excellent heat stability and coloration resistance can be obtained.

## Description

### Detailed Description of the Invention

### Field of the Invention

The present invention relates to a chlorine-containing resin composition which stabilizes a chlorine-containing resin and prevents initial coloration caused by a calcium hydroxide compound. More specifically, it relates to a chlorine-containing resin composition which contains a hydrotalcite compound in such a small amount that does not cause foaming to improve resistance to thermal coloration.

### Prior Art

Chlorine-containing resins, particularly hard vinyl chloride-based resins are inexpensive and have been widely used in water supply and drainage pipes, gutters, window frames and the like. However, as vinyl chloride-based resins have poor stability against heat and light, a large number of stabilizers have been developed and used. In recent years, lead-based and cadmium-based stabilizers which are inexpensive and have an excellent effect as a stabilizer have come into question from the viewpoint of environmental safety. Therefore, calcium-zinc-based stabilizers which are effective in terms of environmental safety are now being widely used.

Since vinyl chloride resins are unsatisfactory in heat stability at the time of processing, an inorganic stabilizer containing a hydrotalcite compound is contained in the resins to improve heat stability. However, they encounter with new problems such as marked initial coloration at the time of processing and foaming.

Various additives for improving the heat stability and preventing the coloration and foaming of a chlorine-containing resin such as a vinyl chloride resin have recently been proposed. For example, JP-A 6-316662 (the term "JP-A" as used herein means an "unexamined published Japanese patent application") discloses addition of a calcium-based composite metal hydroxide, β-diketone and polyhydric alcohol.

However, a resin composition which comprises a calcium-based composite metal hydroxide and a polyhydric alcohol is satisfactory in terms of heat stability against blackening that a zinc burning phenomenon (deterioration caused by zinc) is prevented but strongly yellowed by initial coloration at the time of processing. Thus, a satisfactory effect cannot be obtained even when a coloration preventing agent such as a β-diketone is used. Since a polyhydric alcohol has low compatibility with a resin, it causes a bleed-out to worsen the appearance of a resin molded product. Therefore, the amount of the polyhydric alcohol is greatly limited.

Meanwhile, JP-A 9-31281 discloses a vinyl chloride resin composition which comprises a zinc compound, hydrotalcite, polyvinyl alcohol and polymethyl methacrylate.

However, the same tendency as described above is seen even in this resin composition which comprises a zinc compound, polyvinyl alcohol and hydrotalcite and a satisfactory resin composition cannot be obtained. When a large amount of the hydrotalcite is added, the obtained resin molded product foams.

The foaming of a resin composition which comprises a hydrotalcite easily occurs in a hard vinyl chloride resin molded product and chlorinated vinyl chloride resin molded product which are processed at a high temperature. For example, it causes a problem at the time of injection molding and extrusion molding of hard vinyl chloride.

JP-A 9-151286 discloses a chlorine-containing resin composition which comprises an organic tin-containing a stabilizer, inorganic stabilizer such as calcium hydroxide and a trace amount of boric acid to improve initial coloration. Although this resin composition hardly foams, its thermal deformation temperature lowers and it may cause a bleed-out phenomenon that the surface of its molded product becomes sticky.

### Summary of the Invention

It is a first object of the present invention to provide a chlorine-containing resin composition which is not foamed substantially by molding.

It is a second object of the present invention to provide a chlorine-containing resin composition whose initial coloration at the time of processing is improved.

It is a third object of the present invention to provide a chlorine-containing resin composition having excellent heat stability.

The inventors of the present invention have conducted intensive studies to attain the above objects of the present invention and have found that the initial coloration and heat stability of a chlorine-containing resin composition can be greatly improved by adding a hydrotalcite in such a small amount to calcium containing hydroxide that does not cause foaming, a β-diketone or dihydroxypyridine-based initial coloration preventing agent and a specific metal salt.

The present invention has been accomplished based on the above finding and relates to a resin composition which comprises the following components "a" to "e":
(A) 100 parts by weight of a chlorine-containing resin (component "a");
(B) 0.1 to 10 parts by weight of a calcium-containing hydroxide represented by the following formula (1) (component "b"):

   Ca₁₋ₓMₓ(OH)₂ (1)

   wherein M is Mg and/or Zn, and x satisfies 0 ≦ x < 0.5;
(C) 0.1 to 1.0 part by weight of a hydrotalcite compound represented by the following formula (2) (component "c"):

   (M²⁺)_{1-z}Al_{z}(OH)₂(Aⁿ⁻)_{z/n}·mH₂O (2)

   wherein M²⁺ is Mg or (Mg + Zn), with the proviso that Mg > Zn when M²⁺ is (Mg + Zn), z satisfies 0 < z < 0.5, Aⁿ⁻ is an anion having a valence of n, and m satisfies 0 ≦ m ≦ 1;
(D) 0.05 to 1.0 part by weight of at least one compound selected from the group consisting of a β-diketone compound, and dihydropyridine and oligomer thereof (component "d"); and
(E) 0.1 to 5 parts by weight of at least one metal salt (component "e") selected from the group consisting of carboxylates and organic phosphates of alkali earth metals and zinc.

A detailed description is subsequently given of the chlorine-containing resin composition of the present invention.

The chlorine-containing resin as the component "a" of the present invention is used in molded articles so-called "hard vinyl chloride resin". The resin as the component "a" contains chlorine in its constituent unit and has a total chlorine content of preferably 30 wt% or more, particularly preferably 50 wt% or more. The chlorine-containing resin may be obtained by polymerizing a monomer containing chlorine in the molecule or by chlorinating a resin. Illustrative examples of the component "a" include polyvinyl chloride, polyvinylidene chloride, chlorinated polyvinyl chloride, vinyl chloride-vinyl acetate copolymer, vinyl chloride-ethylene copolymer, vinyl chloride-propylene copolymer, vinyl chloride-butadiene copolymer, vinyl chloride-styrene copolymer, vinyl chloride-vinylidene chloride copolymer, vinyl chloride-urethane copolymer, vinyl chloride-styrene-maleic anhydride terpolymer and the like.

Out of these, polyvinyl chloride, polyvinylidene chloride and chlorinated polyvinyl chloride are preferred as the component "a".

The calcium-containing hydroxide as the component "b" in the chlorine-containing resin composition of the present invention is represented by the following formula (1):

Ca₁₋ₓMₓ(OH)₂ (1)

wherein M is Mg, Zn or (Mg + Zn), and x satisfies 0 ≦ x < 0.5, preferably 0.01 ≦ x ≦ 0.2.

The component "b" encompasses a solid solution having the same crystal structure as calcium hydroxide and part of Ca of which is substituted by Mg, Zn or both, in addition to calcium hydroxide. The calcium-containing hydroxide may contain magnesium hydroxide or zinc oxide as an impurity. A compound of the above general formula (1) in which M is Zn has a larger resin coloration suppression effect than a compound of the formula (1) in which M is Mg.

The calcium-containing hydroxide is preferably in the form of fine particles to exhibit its capability in full and has an average particle diameter measured by a laser microtrack method of about 0.1 to 10 µm, preferably 0.3 to 5 µm and a specific surface area measured by a BET method of 1 m²/g or more, preferably 5 m²/g or more and 20 m²/g or less. The calcium-containing hydroxide used in the present invention can be produced by various methods. Preferably, it is produced by a known method disclosed by JP-A 6-316662. The calcium hydroxide used in the present invention may be calcium hydroxide obtained by hydrating calcium oxide obtained by baking naturally produced calcium carbonate. The amount of the calcium hydroxide or calcium-containing hydroxide is 0.1 to 10 parts by weight, preferably 0.5 to 5 parts by weight based on 100 parts by weight of the chlorine-containing resin (component "a"). When the amount is smaller than 0.1 part by weight, a satisfactory stabilizing effect is not obtained and when the amount is larger than 10 parts by weight, the color and mechanical properties of the resin are impaired.

The hydrotalcite compound as the component "c" in the chlorine-containing resin composition of the present invention is represented by the following formula (2):

(M²⁺)_{1-z}Al_{z}(OH)₂(Aⁿ⁻)_{z/n}·mH₂O (2)

wherein M²⁺ is Mg or (Mg + Zn), with the proviso that Mg > Zn when M²⁺ is (Mg + Zn), z satisfies 0 < z < 0.5, preferably 0.2 ≦ z ≦ 0.4, and m satisfies 0 ≦ m ≦ 1, preferably 0 ≦ m ≦ 0.7.

Aⁿ⁻ is an anion having a valence of n, as exemplified by CO₃²⁻, ClO₄⁻, HPO₄²⁻, HPO₃²⁻ and SO₄²⁻, out of which CO₃²⁻ is particularly preferred.

The above hydrotalcite compound may be natural or synthetic but preferably synthetic. This hydrotalcite compound has a specific surface area measured by a BET method of 5 to 30 m²/g, preferably 6 to 15 m²/g and an average particle diameter measured by the laser microtrack method of 5 µm or less, preferably 0.2 to 2 µm. The amount of the hydrotalcite compound is 0.1 to 1.0 part by weight, preferably 0.2 to 0.5 part by weight based on 100 parts by weight of the chlorine-containing resin (component "a"). When the amount is smaller than 0.1 part by weight, the effect of preventing coloration becomes unsatisfactory and heat stability deteriorates and when the amount is larger than 1.0 part by weight, foaming may be caused by water of crystallization or carbon dioxide gas during the processing of the chlorine-containing resin.

The calcium-containing hydroxide (component "b") and the hydrotalcite compound (component "c") used in the present invention may be used as they are but preferably surface treated with a silane, titanium or aluminum-based coupling agent, or a higher fatty acid, phosphoric ester, alkali metal salt thereof or ester of a polyhydric alcohol and fatty acid to exhibit the effect of the present invention more markedly.

The above surface treatment method may be a wet method in which the component "b" or "c" is suspended in a solvent such as water or alcohol and heated at 20 to 80° C, a solution of a surface treatment agent dissolved in a solvent such as water or alcohol is added to the suspension to separate a solid content from a liquid content, and the solid content is washed and dried, or a dry method in which the above surface treatment agent solution is added while the powders of the component "b" or "c" are stirred at a temperature of 50 to 150° C.

A description is subsequently given of the component "d" to be contained in the chlorine-containing resin composition of the present invention.

The component "d" is a β-diketone compound, or dihydropyridine or oligomer thereof.

The β-diketone compound is represented by the following formula (3).

R₁-CO-CHR₂-CO-R₃ (3)

In the above general formula (3), R₁ and R₃ are the same or different and each a linear or branched alkyl group, alkenyl group or alicyclic group, all of which preferably have up to 30 carbon atoms. The total number of carbon atoms of R₁ and R₃ is particularly preferably 12 to 30. R₂ is preferably a hydrogen atom, alkyl group having up to 30 carbon atoms or alkenyl group having up to 30 carbon atoms.

Illustrative examples of the β-diketone compound include dehydroacetic acid, dehydrobenzoylacetic acid, 2-benzylcyclohexan-1,3-dione, acetyltetralone, palmitoyltetralone, benzoyltetralone, 2-acetylcyclohexanon-1,3-dione, benzoylacetylmethane, tribenzoylmethane, stearoyl·benzoylmethane, palmitoyl·benzoylmethane, dibenzoylmethane, stearoyl-4-methoxybenzoylmethane, benzoyl·acetyl·ethylmethane, distearoylmethane, stearoyl·acetylmethane, benzoyl·phenylacetylmethane and the like. The metal salts such as lithium, sodium, potassium, magnesium, calcium, zinc and aluminum salts of these β-diketone compounds may also be used. Out of the above β-diketone compounds, stearoyl·benzoylmethane and dibenzoylmethane are particularly preferred. The amount of the β-diketone compound or metal salt thereof is 0.05 to 1 part by weight, preferably 0.1 to 0.5 part by weight based on 100 parts by weight of the chlorine-containing resin (component "a"). When the amount is smaller than 0.05 part by weight, coloration resistance becomes unsatisfactory and when the amount is larger than 1 part by weight, the effect does not improve more and heat stability becomes worse.

The component "d" may be dihydropyridine or oligomer thereof. The dihydropyridine or oligomer thereof can be represented by the following formula (4).

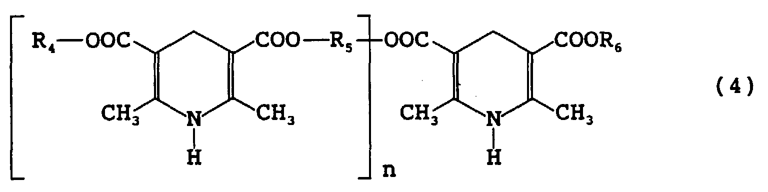

In the above formula (4), R₄ and R₆ are the same or different and each an alkyl group having 1 to 18 carbon atoms, alkenyl group having 3 to 10 carbon atoms or aryl group having 6 to 10 carbon atoms (the aryl group may be substituted by an alkyl group or alkoxy group having 1 to 18 carbon atoms, respectively), R₅ is an alkylene group having 1 to 18 carbon atoms which may have a substituent, said substituents include carboxyl group, hydroxyl group, alkyl group and alkoxy group having 1 to 12 carbon atoms, respectively and n is an integer of 0 to 20, preferably 0 to 5. R₄ and R₆ are preferably an alkyl group having 1 to 12 carbon atoms, and R₅ is preferably an alkylene group having 1 to 12 carbon atoms.

The dihydropyridine is exemplified by dihydro-1,4-dimethyl-2,6-dicarbododecyloxy-3,5-pyridine and the oligomer thereof is exemplified by the Cinesarl M of Lagoal Co., Ltd. of Italy. The amount of the dihydropyridine or oligomer thereof is 0.05 to 1 part by weight, preferably 0.1 to 0.5 part by weight based on 100 parts by weight of the chlorine-containing resin (component "a"). When the amount is smaller than 0.05 part by weight, the effect of preventing coloration becomes unsatisfactory and when the amount is larger than 1 part by weight, the effect does not improve so much but it becomes financially disadvantageous.

The component "e" used in the present invention is a carboxylate or organic phosphate of an alkali earth metal or zinc. Examples of the alkali earth metal include magnesium, calcium, strontium and barium. The carboxylic acid forming the metal salt is preferably an aliphatic mono-or di-carboxylic acid having 2 to 25 carbon atoms, preferably 5 to 20 carbon atoms, aromatic mono- or di-carboxylic acid having 7 to 20 carbon atoms, preferably 7 to 15 carbon atoms, or alicyclic mono- or di-carboxylic acid having 7 to 20 carbon atoms, preferably 7 to 15 carbon atoms.

Illustrative examples of these carboxylic acids include caproic acid, caprylic acid, pelargonic acid, 2-ethylhexylic acid, caprilic acid, neodecanoic acid, undecylenic acid, lauric acid, myristic acid, palmitic acid, stearic acid, isostearic acid, 12-hydroxystearic acid, recinoleic acid, linoleic acid, linolenic acid, oleic acid, arachic acid, behenic acid, erucic acid, benzoic acid, ethylbenzoic acid, isopropylbenzoic acid, p-t-butylbenzoic acid, toluic acid, xylylic acid, salicylic acid, naphthenic acid, 5-t-octylsalicylic acid, cyclohexanecarboxylic acid, adipic acid, maleic acid, acrylic acid, methacrylic acid and the like.

The organic phosphate forming the metal salt is an aliphatic, alicyclic or aromatic mono- or di-ester having 6 to 20 carbon atoms of phosphoric acid. Illustrative examples of the organic phosphate include mono- and di-octylphosphates, mono- and di-dodecylphosphates, mono- and di-octadecylphosphates, mono- and di-(nonylphenyl)phosphates, nonylphenyl phosphonate, stearyl phosphonate and the like.

The component "e" is preferably a higher fatty acid salt having 12 or more carbon atoms because it has the effect of improving the lubricity of a resin composition. The component "e" is particularly preferably a calcium or zinc carboxylate, especially a higher fatty acid salt of zinc. The amount of the component "e" is 0.1 to 5 parts by weight, preferably 0.2 to 2 part by weight based on 100 parts by weight of the chlorine-containing resin. When the amount is smaller than 0.1 part by weight, heat stability and coloration resistance become both unsatisfactory and when the amount is larger than 5 parts by weight, workability is called in question.

The chlorine-containing resin composition of the present invention may contain other resin in limits that do not impair its mechanical properties and a plasticizer in an amount of 0 to about 5 parts by weight based on 100 parts by weight of the chlorine-containing resin.

The chlorine-containing resin composition of the present invention may contain various additives which are generally used, such as a phenol-based or sulfur-based antioxidant, organic phosphite compound, epoxy compound, polyhydric alcohol or ester derivative thereof, ultraviolet light absorber, hindered amine-based optical stabilizer, filler such as calcium carbonate or talc, zeolite compound, inorganic or organic pigment, anti-choking agent, foaming agent, lubricant, antistatic agent, impact modifier, workability modifier, woodmeal and the like in limits that do not impair the characteristic properties of the resin.

The chlorine-containing resin composition of the present invention can be subjected to rolling, calendering, extrusion molding, pressing or the like. The resin composition of the present invention can be advantageously used to produce extrusion molded products such as window frames, external wall materials and gutters, and molded into a pipe, joint, plate, wavy plate, film or the like.

### Examples

The following examples are provided for the purpose of further illustrating the present invention but are in no way to be taken as limiting.

### preparation of calcium-containing hydroxide and hydrotalcite compound

### (1) sample 1

0.9 liter of a Ca(NO₃)₂ aqueous solution having a concentration of 1 mol/l and 0.1 liter of a Zn(NO₃)₂ aqueous solution having a concentration of 1 mol/l were mixed together to prepare 1 liter of an aqueous mixed solution which was then heated at 30° C. Thereafter, 1 liter of an Na(OH)₂ aqueous solution having a concentration of 2 mols/l was prepared in a 3-liter beaker and the above aqueous mixed solution was added dropwise to this solution under agitation over 20 minutes while heated at 30° C to carry out a reaction. The reaction product was filtered and washed with water to obtain a cake which was then dispersed in 1 liter of water. This dispersion was heated at 80° C and a solution of 1 g of sodium stearate dissolved in 100 ml of hot water was added to this dispersion under agitation to carry out a surface treatment. The surface treated product was filtered, washed with water and dried. The dried product was subjected to the analysis of its chemical composition and the measurement of its BET specific surface area and particle size distribution by the microtrack method. The results are shown in Table 1.

### (2) sample 2

The dried product was obtained and analyzed in the same manner as in Synthetic Example of the sample 1 except that a Mg(NO₃)₂ aqueous solution having a concentration of 1 mol/l was used in place of the Zn(NO₃)₂ aqueous solution. The results are shown in Table 1.

### (3) sample 3

1 liter of an NaOH aqueous solution having a concentration of 2 mols/l was prepared in a 3-liter beaker and heated at 50° C. 1 liter of a CaCl₂ aqueous solution having a concentration of 1 mol/l and heated at 50° C was added dropwise to the above aqueous solution under agitation over 10 minutes to carry out a reaction. The reaction product was filtered and washed with water to obtain a cake which was then dispersed in 1 liter of water. This dispersion was heated at 80° C and a solution of 1 g of sodium laurate dissolved in hot water was added to the dispersion under agitation to carry out a surface treatment. The surface treated product was filtered, washed with water and dried. The dried product was analyzed and the results are shown in Table 1.

### (4) sample 4

Sample 4 which is calcium hydroxide obtained by hydrating quick lime obtained from the natural lime of Ube Materials Co., Ltd. was analyzed. The results are shown in Table 1.

### (5) sample 5

A mixed solution obtained by mixing 300 ml of a magnesium chloride aqueous solution having a concentration of 1 mol/l, 100 ml of a zinc chloride aqueous solution having a concentration of 1 mol/l and 200 ml of an aluminum chloride aqueous solution having a concentration of 1 mol/l and a mixed solution obtained by mixing 600 ml of a sodium hydroxide aqueous solution having a concentration of 2 mols/l and 100 ml of a sodium carbonate aqueous solution having a concentration of 1 mol/l were injected into a reactor filled with water at the same time under agitation to a pH of 9.5 to obtain a reaction product. This reaction product was filtered and washed with water to obtain a cake which was then dispersed into 1 liter of water and aged hydrothermally at 120° C for 13 hours. The cake was then cooled, taken out and heated at 80° C, and a solution of 1 g of sodium laurate dissolved in hot water was added under agitation to carry out a surface treatment. The surface treated product was filtered, washed with water and dried. The dried product was analyzed and the results are shown in Table 1.

### (6) sample 6

This is a commercially available hydrotalcite (DHT-4A of Kyowa Chemical Co., Ltd.)

### (7) sample 7

A mixed solution obtained by mixing 350 ml of a magnesium chloride aqueous solution having a concentration of 1 mol/l and 150 ml of an aluminum chloride aqueous solution having a concentration of 1 mol/l and a mixed solution obtained by mixing 500 ml of a sodium hydroxide aqueous solution having a concentration of 2 mols/l and 75 ml of a sodium carbonate aqueous solution having a concentration of 1 mol/l were injected into reactor filled with water at the same time under agitation to a pH of 9.5 to obtain a reaction product. This reaction product was filtered and washed with water to obtain a cake which was then dispersed into 2 liters of water and heated at 80° C. A solution of 5 g of stearic acid dissolved in hot water was added under agitation to carry out a surface treatment. The surface treated product was filtered, washed with water and dried to prepare a sample. The results are shown in Table 1.

### (8) sample 8

1 liter of a mixed solution was prepared by mixing 800 ml of a CaCl₂ aqueous solution having a concentration of 1 mol/l, 100 ml of a MgCl₂ aqueous solution having a concentration of 1 mol/l and 100 ml of a ZnCl₂ aqueous solution having a concentration of 1 mol/l and heated at 30° C. Thereafter, 1 liter of a NaOH aqueous solution having a concentration of 2 mols/l was prepared in a 3-liter beaker and heated at 30° C. The above mixed solution was added dropwise to this aqueous solution under agitation over 20 minutes to carry out a reaction. After the reaction, the same treatment as that of sample 1 was carried out and the reaction product was analyzed. The results are shown in Table 1.

### (9) sample 9

A sample was prepared in the same manner as Synthetic Example of sample 8 except that the amount of the CaCl₂ aqueous solution having a concentration of 1 mol/l was changed to 330 ml, the amount of the MgCl₂ aqueous solution having a concentration of 1 mol/l was changed to 330 ml and the amount of the ZnCl₂ aqueous solution having a concentration of 1 mol/l was changed to 330 ml. The results are shown in Table 1.

**Table 1**

| sample No. | chemically analyzed composition formula | average secondary particle diameter (µm) | BET specific surface area (m²/g) |
|---|---|---|---|
| 1 | Ca_{0.9}Zn_{0.1}(OH)₂ | 4.2 | 7.5 |
| 2 | Ca_{0.9}Mg_{0.1}(OH)₂ | 4.8 | 9.2 |
| 3 | Ca(OH)₂ | 1.9 | 4.2 |
| 4 | Ca(OH)₂ | 5.1 | 2.5 |
| 5 | Mg_{0.6}Zn_{0.17}Al_{0.33}(OH)₂(CO₃)_{0.17}·0.51H₃O | 0.5 | 8.7 |
| 6 | Mg_{0.7}Al_{0.3}(OH)₂(CO₃)_{0.15}·0.54H₂O | 0.6 | 9.5 |
| 7 | Hg_{0.7}Al_{0.3}(OH)₂(CO₃)_{0.15}·0.55H₂O | 12.6 | 86.1 |
| 8 | Ca_{0.8}Mg_{0.1}Zn_{0.1}(OH)₂ | 4.5 | 13.0 |
| 9 | Ca_{0.33}Mg_{0.33}Zn_{0.33}(OH)₂ | 7.2 | 25.6 |

### Examples 1 to 6 and Comparative Examples 1 to 7

Test sheets having a thickness of about 0.7 mm were prepared by blending the following components and kneading them with a 8-inch roll at 190° C for 3 minutes.

Calcium-containing hydroxides (sample Nos. 1 to 4 and 8 and 9) and hydrotalcite compounds (sample Nos. 5 to 7) were blended in amounts shown in Table 2. KM-336P and PA-20 denote the following. The "WAX OP" of Hoechst AG. was used as a montanic ester.
KM-336P; Paraloid KM-336P impact resistance reinforcement of Kureha Chemical Industry Co., Ltd.
PA-20; Kaneace PA-20 workability modifier of Kaneka Corporation

The coloration of a pressed plate formed by placing the obtained four polyvinyl chloride sheets one upon another and having a thickness of about 3 mm was evaluated 5 minutes, 15 minutes and 30 minutes after a press heat resistance test (190° C).

As for foamability, the vinyl chloride sheet of the test sample 5 minutes after the press heat resistance test was cut to a size of 3 cm x 3 cm, left in a chamber for a whole day and then placed in an oven heated at 200° C for 10 minutes to evaluate by visual observation whether it was foamed or not. The results are shown in Table 2.

| composition; | |
|---|---|
| vinyl chloride resin (polymerization degree of 700) | 100 parts by weight |
| KM-336P (resin modifier) | 7 parts by weight |
| PA-20 (processing aid) | 1 part by weight |
| hydrogenated castor oil | 0.8 part by weight |
| montanic ester | 0.4 part by weight |
| calcium stearate | 0.5 part by weight |
| zinc stearate | 0.6 part by weight |
| dibenzoylmethane | 0.1 part by weight |
| * Cinesarl M in place of dibenzoylmethane (Example 5) | 0.1 part by weight |
| **dibenzoylmethane and Cinesarl M were not used (Comparative Example 5) | 0 part by weight |
| *** dihydro-1,4-dimethyl-2,6-dicarbododecyloxy-3,5-pyridine (Example 6) in place of dibenzoylmethane | 0.1 part by weight |

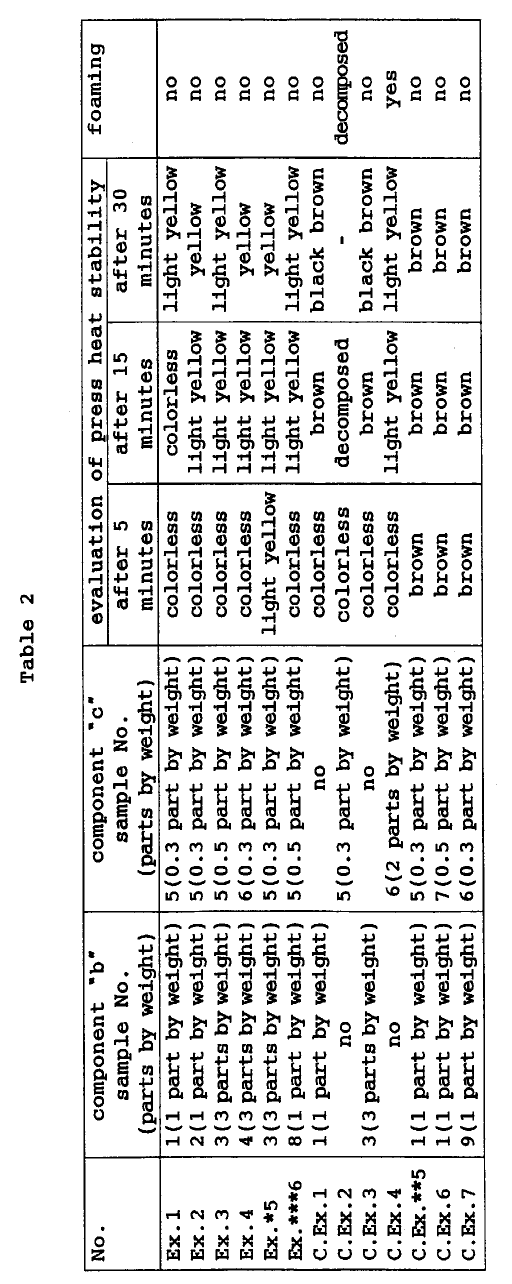

According to the present invention, there can be obtained a chlorine-containing resin composition which suppresses foaming caused by water or carbonic acid gas generated from a hydrotalcite compound, has the same zinc burning resistance as when a polyhydric alcohol is blended, is non-toxic and has high workability and excellent heat stability and coloration resistance.

## Claims

1. A chlorine-containing resin composition comprising:
(A) 100 parts by weight of a chlorine-containing resin (component "a");
(B) 0.1 to 10 parts by weight of a calcium-containing hydroxide represented by the following formula (1) (component "b"):
Ca₁₋ₓMₓ(OH)₂ (1)
wherein M is Mg and/or Zn, and x satisfies 0 ≦ x < 0.5;
(C) 0.1 to 1.0 part by weight of a hydrotalcite compound represented by the following formula (2) (component "c"):
(M²⁺)_{1-z}Al_{z}(OH)₂(Aⁿ⁻)_{z/n}·mH₂O (2)
wherein M²⁺ is Mg or (Mg + Zn), with the proviso that Mg > Zn when M²⁺ is (Mg + Zn), z satisfies 0 < z < 0.5, Aⁿ⁻ is an anion having a valence of n, and m satisfies 0 ≦ m ≦ 1;
(D) 0.05 to 1.0 part by weight of at least one compound (component "d") selected from the group consisting of a β-diketone compound, and dihydropyridine and oligomer thereof; and
(E) 0.1 to 5 parts by weight of at least one metal salt (component "e") selected from the group consisting of carboxylates and organic phosphates of alkali earth metals and zinc.

2. The resin composition of claim 1, wherein the component "a" has a chlorine content of 30 wt% or more.

3. The resin composition of claim 1, wherein the component "a" is polyvinyl chloride, polyvinylidene chloride or chlorinated polyvinyl chloride.

4. The resin composition of claim 1, wherein the component "b" has an average particle diameter of 0.1 to 10 µm.

5. The resin composition of claim 1, wherein x in the general formula (1) of the component "b" satisfies 0.01 ≦ x ≦ 0.2.

6. The resin composition of claim 1, wherein the amount of the component "b" is 0.5 to 5 parts by weight based on 100 parts by weight of the component "a".

7. The resin composition of claim 1, wherein the component "c" has an average particle diameter of 0.2 to 2 µm.

8. The resin composition of claim 1, wherein Aⁿ⁻ in the general formula (2) of the component "c" is a carbonic acid anion (CO₃²).

9. The resin composition of claim 1, wherein z in the general formula (2) of the component "c" satisfies 0.2 ≦ z ≦ 0.4.

10. The resin composition of claim 1, wherein the amount of the component "c" is 0.2 to 0.5 part by weight based on 100 parts by weight of the component "a".

11. The resin composition of claim 1, wherein the component "d" is a β-diketone compound represented by the following general formula (3):
R₁-CO-CHR₂-CO-R₃ (3)
wherein R₁ and R₃ are the same or different and each a linear or branched alkyl group alkenyl, aryl group or alicyclic group having up to 30 carbon atoms, respectively, and R₂ is a hydrogen atom, alkyl group or alkenyl group having up to 30 carbon atoms, respectively.

12. The resin composition of claim 1, wherein the component "d" is dihydropyridine or oligomer thereof represented by the following general formula (4): 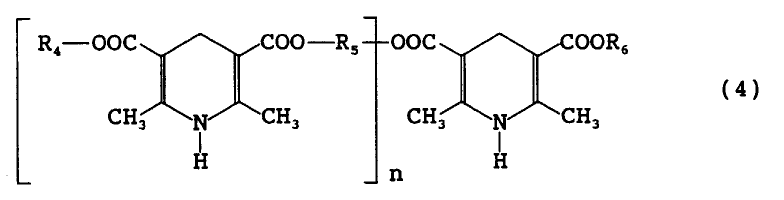 wherein R₄ and R₆ are the same or different and each an alkyl group having 1 to 18 carbon atoms, alkenyl group having 3 to 10 carbon atoms or aryl group having 6 to 10 carbon atoms (the aryl group may be substituted by an alkyl group or alkoxy group having 1 to 18 carbon atoms, respectively), and R₅ is an alkylene group having 1 to 18 carbon atoms which may have a substituent, and n is an integer of 0 to 20.

13. The resin composition of claim 1, wherein the amount of the component "d" is 0.1 to 0.5 part by weight based on 100 parts by weight of the component "a".

14. The resin composition of claim 1, wherein the component "e" is a zinc carboxylate.

15. The resin composition of claim 1, wherein the amount of the component "e" is 0.2 to 2 part by weight based on 100 parts by weight of the component "a".
